# EUROPEAN PATENT APPLICATION

(11) **EP 4 119 439 A1**
(43) Date of publication of application: **18.01.2023**
(21) Application number: 21805339.5
(22) Date of filing: 25.08.2021
(51) Int. Cl.: B63H 21/17, B60L 58/40, B60L 50/60, B63H 21/00

(54) **POWER MANAGEMENT SYSTEM FOR HYBRID SHIP**

(30) Priority: 25.05.2021 KR 20210066649
(71) Applicant: VINSSEN CO., LTD., Samho-eup, Yeongam-gun Jeollanam-do 58457 (KR)
(72) Inventor: SUNG, Il Hyuk, Jeju-do 63589 (KR) (CN); KO, Youn Soo, Gyeongsangnam-do 53315 (KR) (CN)
(74) Representative: Beck & Rössig European Patent Attorneys
(86) International application number: PCT/KR2021/011344
(87) International publication number: WO 2022/250203

(57) **Abstract**

Proposed is a power management system. More particularly, proposed is a power management system for a hybrid boat, the power management system being capable of efficiently managing operation of a fuel cell of the hybrid boat powered by the fuel cell and a battery together.

## Description

### Technical Field

The present disclosure relates to a power management system. More particularly, the present disclosure relates to a power management system for a hybrid boat, the power management system being capable of efficiently managing operation of a fuel cell of the hybrid boat powered by the fuel cell and a battery together.

### Background Art

Worldwide environmental regulations have been strengthened to reduce emission of greenhouse gases and air pollutants, and various measures have been arranged accordingly. In addition, there is a growing need for effective and reasonable energy-saving methods along with minimization of environmental pollution.

As the regulations on emission of greenhouse gases entered into force in the United Nations Framework Convention on Climate Change, the International Maritime Organization legislated regulations on factors in marine environment destruction caused by boats. Accordingly, the regulations will be strengthened aiming for a 30 % reduction of the greenhouse gas emission by 2025 compared to the current situation. In addition, in the International Convention for the Prevention of Pollution from Ships, Annex VI strengthens regulations on emission of nitrogen oxides and sulfur oxides, so the need for effective and reasonable energy-saving methods has gradually increased.

Boats have been developed focusing on a diesel electric propulsion system, but recently, there has been an effort to develop an eco-friendly hybrid boat using a battery or a hydrogen fuel cell as a power source.

In the meantime, a hybrid boat operates using a battery charged on the land and a hydrogen fuel cell together, but when the boat performs the operation of the fuel cell inefficiently after departure, a cruising range decreases.

### Disclosure

### Technical Problem

Accordingly, the present disclosure has been made keeping in mind the above problem occurring in the related art, and the present disclosure is directed to providing a power management system that is capable of increasing a cruising range of a hybrid boat by efficiently performing power management of the hybrid boat powered by a battery and a fuel cell together.

### Technical Solution

In order to achieve the above-described objective, the present disclosure provides a power management system for a hybrid boat, wherein the power management system operates a motor by simultaneously or selectively using generated power of a fuel cell and charge power of a battery, the power management system being configured to: operate the motor only with the charge power of the battery until an output of the motor reaches a first power after the boat departs; operate the fuel cell when the output of the motor reaches the first power, and thus operate the motor only with the generated power of the fuel cell; and charge the battery with power remaining after the generated power of the fuel cell is used in operating the motor when a command value of the motor is lower than a value of the first power while the fuel cell is operated, or supply the generated power of the fuel cell and the charge power of the battery together to the motor for operation when the command value of the motor is higher than the value of the first power while the fuel cell is operated.

In an exemplary embodiment, when the battery is fully charged because the command value of the motor is lower than the value of the first power while the fuel cell is operated, the value of the first power may be lowered to reduce an output of the fuel cell.

In addition, the present disclosure provides a hybrid boat equipped with the power management system.

### Advantageous Effects

The present disclosure has the following effects.

According to the power management system of the present disclosure, the surplus power remaining after the power generated by the fuel cell is supplied to the motor is used in charging the battery, thereby increasing efficiency. When the battery is fully charged with the power generated by the fuel cell, fuel consumption is reduced by lowering the output of the fuel cell, so that the sailing distance can be maximized.

### Description of Drawings

FIG. 1 is a diagram illustrating a configuration of a power management system according to an embodiment of the present disclosure.
FIG. 2 is a graph illustrating operation of a power management system according to an embodiment of the present disclosure.

### Best Mode

As the terms used in the present disclosure, general terms that are widely used at present are selected, but terms that are arbitrarily selected by the applicant are used in particular cases. In this case, these terms should be interpreted as not the titles of the terms but the meaning described in the detailed description for implementing the disclosure or the meaning of the terms.

Hereinafter, a technical configuration of the present disclosure will be described in detail with reference to preferred embodiments illustrated in the accompanying drawings.

However, the present disclosure is not limited to the embodiment described herein and may be embodied in various forms. Throughout the whole specification, the same reference numerals designate the same elements.

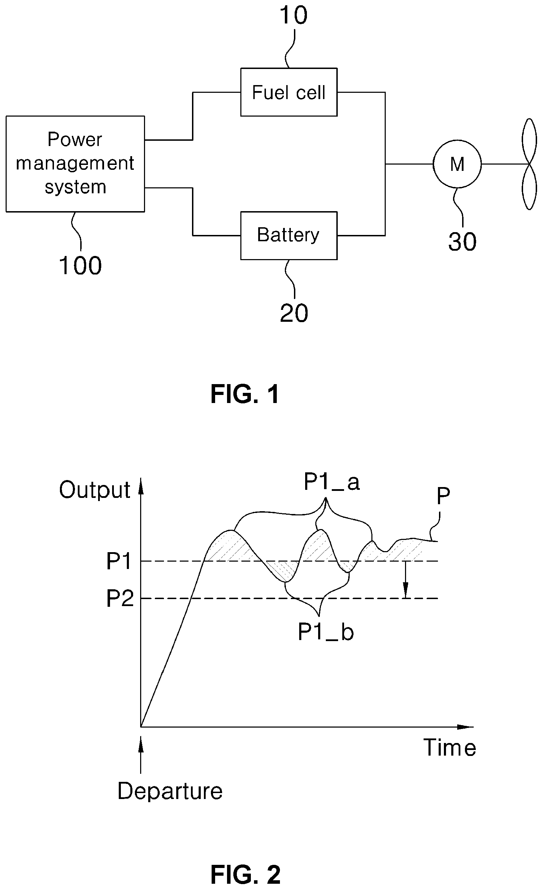

FIG. 1 is a diagram illustrating a configuration of a power management system according to an embodiment of the present disclosure.

Referring to FIG. 1, the power management system 100 of the present disclosure is a system for propelling a boat by supplying power from a fuel cell 10 and a battery 20 to a motor 30.

In addition, the power management system 100 may be a part of an electronic control unit (ECU) for controlling the operation of the boat or may be provided as a separate device.

In addition, together with the fuel cell 10, the battery 20, and the motor 30, the power management system 100 may be mounted in the body of the boat and may be provided in the form of one complete hybrid boat.

The power management system 100 propels the boat by simultaneously or selectively supplying generated power generated by the fuel cell 10 and charge power with which the battery 20 is charged, to the motor 30.

In the meantime, the battery 20 is charged with power from a charger on the land when the boat is at anchor. Therefore, after departure, power needs to be consumed as efficiently as possible to reduce the consumption of fuel of the fuel cell 10, and to increase the sailing time period on the sea.

FIG. 2 is a graph illustrating operation of a power management system according to an embodiment of the present disclosure, and is a graph showing an output curve P of a motor 30 after a boat departs.

As shown in FIG. 2, in general, the output curve P rises steeply after departure and after a predetermined time period, the increase and the decrease of the output repeat on the sea.

First, after departure, the power management system 100 operates the motor 30 using only the charge power of the battery 20 until the output of the motor 30 reaches a first power P1.

In other words, since the battery 20 is fully charged while the boat is at anchor, the motor 30 is operated using only the power of the battery 20 at the initial stage after the departure.

Next, the power management system 100 operates the fuel cell 10 when the output of the motor 30 reaches the first power P1, and operates the motor 30 only with the generated power of the fuel cell 10.

That is, the first power P1 is equal to a preset output value of the fuel cell 10.

When a command value P1_b of the motor 30 is lower than the value of the first power P1 while the fuel cell 10 is operated, a part of the generated power of the fuel cell 10 is supplied to the motor 30 and the remaining surplus power is lost.

However, in the present disclosure, the battery 20 is charged with the remaining surplus power.

Accordingly, the power generated by the fuel cell 10 is not lost, but is stored in the battery 20 and used, thereby increasing efficiency.

However, conversely, when a command value P1_a of the motor 30 is higher than the value of the first power P1 while the fuel cell 10 is operated, the generated power of the fuel cell 10 as well as the power of the battery 20 are supplied to the motor 30 so that the motor 30 produces a desired output.

In the meantime, when the sections in which the command value of the motor 30 is lower than the value of the first power P1 become more numerous than the sections in which the command value of the motor 30 is higher than the value of the first power P1, the battery 20 may be fully charged.

In this case, by lowering the value of the first power P1 to a value of the second power P2, the amount of power generation by the fuel cell 10 is reduced and fuel consumption is reduced.

Accordingly, according to the power management system 100 of the present disclosure, the power generated by the fuel cell 10 is not lost and used in charging the battery 20 as much as possible, thereby increasing efficiency. When the battery 20 is fully charged with the power generated by the fuel cell 10, fuel consumption is reduced by lowering the output of the fuel cell 10, so that the sailing distance can be maximized.

As described above, while the present disclosure has been illustrated and described in conjunction with the preferred embodiment, the present disclosure is not limited to the aforementioned embodiment. The embodiment can be changed and modified in various forms by those skilled in the art without departing from the spirit of the disclosure.

## Claims

1. A power management system for a hybrid boat, wherein the power management system operates a motor by simultaneously or selectively using generated power of a fuel cell and charge power of a battery, the power management system being configured to:
operate the motor only with the charge power of the battery until an output of the motor reaches a first power after the boat departs;
operate the fuel cell when the output of the motor reaches the first power, and thus operate the motor only with the generated power of the fuel cell; and
charge the battery with power remaining after the generated power of the fuel cell is used in operating the motor when a command value of the motor is lower than a value of the first power while the fuel cell is operated, or supply the generated power of the fuel cell and the charge power of the battery together to the motor for operation when the command value of the motor is higher than the value of the first power while the fuel cell is operated.

2. The power management system of claim 1, wherein when the battery is fully charged because the command value of the motor is lower than the value of the first power while the fuel cell is operated, the value of the first power is lowered to reduce an output of the fuel cell.

3. A hybrid boat equipped with the power management system of claim 1 or 2.
